# EUROPEAN PATENT SPECIFICATION

(11) **EP 3 258 227 B1**
(45) Date of publication and mention of the grant of the patent: **30.12.2020**
(21) Application number: 16749278.4
(22) Date of filing: 10.02.2016
(51) Int. Cl.: G01G 19/393, B65G 27/08

(54) **CONVEYOR APPARATUS AND COMBINED WEIGHING APPARATUS**
FÖRDERERVORRICHTUNG UND KOMBINIERTE WIEGEVORRICHTUNG
APPAREIL TRANSPORTEUR ET APPAREIL DE PESAGE COMBINÉ

(30) Priority: 10.02.2015 JP 2015024657; 10.02.2015 JP 2015024660; 20.02.2015 JP 2015032131
(43) Date of publication of application: 20.12.2017
(73) Proprietor: Ishida Co., Ltd., Kyoto-shi, Kyoto 606-8392 (JP)
(72) Inventor: IKEDA Shinya, Ritto-shi Shiga 520-3026 (JP); KAGEYAMA Toshiharu, Ritto-shi Shiga 520-3026 (JP); MORIWAKI Takakazu, Ritto-shi Shiga 520-3026 (JP); INAZUMI Yoshito, Ritto-shi Shiga 520-3026 (JP)
(74) Representative: Lang, Johannes
(86) International application number: PCT/JP2016/053968
(87) International publication number: WO 2016/129635

(56) References cited:
- EP-A2- 0 152 923
- WO-A1-95/31702
- WO-A1-2013/137008
- JP-A- H1 171 012
- JP-A- H07 198 466
- JP-A- 2002 062 185
- JP-A- 2004 130 786
- JP-A- 2009 008 400
- JP-A- 2013 002 902

## Description

### Technical Field

The present invention relates to a conveyor apparatus and a combined weighing apparatus.

### Background Art

An apparatus described in Patent Literature 1 is known, for example, as a conventional combined weighing apparatus. Such a combined weighing apparatus described in Patent Literature 1 includes a plurality of conveying means for conveying articles, a plurality of weighing means for weighing the articles supplied by each of the conveying means, imaging means for imaging the articles on the conveying means, an image processing means for determining a transporting situation of the articles on the conveying means on the basis of an image signal from the imaging means, a predicting means for predicting a change in a supply amount of articles from each of the conveying means on the basis of the transporting situation, and a controlling means for changing a control amount of each of the conveying means to control the change in the supply amount from each of the conveying means on the basis of the predicted result.

### Citation List

WO 95/31702 A1 (ISHIDA SEISAKUSHO [JP]; IKEDA TETSUO [JP]; WAKAS YUKIO [JP]; MORICHI T), 23 November 1995 (1995-11-23) relates to a combination weighing apparatus.

EP 0 152 923 A2 (ISHIDA SCALE MFG CO LTD [JP]), 28 August 1985 (1985-08-28), relates to a weighing device.

### Patent Literature

[Patent Literature 1] PCT International Publication No. WO/1995/031702

### Summary of Invention

### Technical Problem

It is a necessary to supply articles from a conveying means to a weighing means so that a supply amount supplied to the weighing means becomes a target supply amount to improve a weighing accuracy in a combined weighing apparatus. A conventional combined weighing apparatus predicts whether a supply amount is increased or reduced on the basis of a weighed result from a weighing means or a transporting situation in a conveying means. The conventional combined weighing apparatus controls a supply amount of the conveying means to become the target supply amount on the basis of this predicted result. However, the conventional combined weighing apparatus cannot highly accurately control the supply amount of the conveying means to become the target supply amount because feed power of the conveying means is controlled only on the basis of whether the supply amount is increased or reduced.

The present invention is directed to providing a conveyor apparatus in which a weighing accuracy in a combined weighing apparatus is improved, and the combined weighing apparatus.

### Solution to Problem

A conveyor apparatus according to the present invention and claim 1 is a conveyor apparatus that controls an operation of a 2 conveying unit such that articles supplied from the conveying unit becomes a target supply amount, and includes: a detecting unit configured to detect a heights (S) of the article on the conveying unit; a drive unit configured to drive the conveying unit with predetermined feed power; a supply amount acquiring part configured to acquire a supply amount (W) supplied from the conveying unit; and a deriving part configured to change the feed power from the drive unit multipl times to convey the article to the conveying unit, acquire the height (S) of the article and the supply amount (W) when the different types of feed power are set, and derive a relation among the height of the article, the supply amount of the conveying unit, and the feed power of the conveying unit using the acquired height (S) of the article and the acquired supply amount (W).

In the conveyor apparatus of this constitution, the drive unit can be controlled with optimal feed power for making a target supply amount on the basis of the feed power that can be obtained from the relation among the height of the article, the supply amount of the the conveying unit, and the feed power of the the conveying unit wherein the relation is automatically derived by the deriving part. Further, the deriving part can automatically derive the relation among the height of the article, the supply amount of the conveying unit, and the feed power of the conveying unit even in an unknown weighing target in a new product or the like. If this relation is used for conveyance control, the article can be supplied from the conveying unit to become the target supply amount. When this conveyor apparatus is used in a combined weighing apparatus, and thereby weighing accuracy is improved, and an operating rate is improved.

According to the invention, the conveyor apparatus further includes a control unit configured to drive the drive unit with the feed power obtained from the height detected in the detecting unit and the target supply amount in the relation. In the conveyor apparatus of this constitution, when the control unit controls the conveying unit on the basis of the relation derived by the deriving part, the article can be supplied to become the target supply amount. This conveyor apparatus is used in the combined weighing apparatus, and thereby the weighing accuracy and the operating rate are improved

In an embodiment, the deriving part calculates a coefficient (A) and a coefficient (B) in a formula below on the basis of the height (S) and the supply amount (W) that are acquired for each of the different types of feed power (P) when the deriving part changes the feed power from the drive unit multipl times to convey the article to the conveying unit. $P = A \times W / S + B$

In the conveyor apparatus of this constitution, the drive unit can be controlled with the optimal feed power for achieving the target supply amount on the basis of the feed power that can be obtained on the basis of a relation between the coefficient (A) and the coefficient (B) that are automatically derived by the deriving part.

In an embodiment, the conveyor apparatus further includes an updating part configured to update the coefficient (A) and the coefficient (B) on the basis of the height (S) and the supply amount (W) that are acquired when the article is conveyed in a state in which the feed power is controlled to become the target supply amount. In the conveyor apparatus of this constitution, for example since the coefficients are updated to a relational expression that takes a situation upstream of the conveyor apparatus into consideration, the control for conveying the article with the optimal feed power for achieving the target supply amount is possible in a real machine.

In an embodiment, the deriving part calculates the coefficient (A) and the coefficient (B) by smoothing the height (S) and the supply amount (W) with respective moving averages. In the conveyor apparatus of this constitution, the height (S) acquired by the detecting unit and the the supply amount (W) acquired by the supply amount acquiring part, which are raw data, are smoothed, and an approximate straight line that is a relational expression between the height (S) and the supply amount (W) is derived, and then a relational expression between a slope of the approximate straight line and a strength is derived.

A combined weighing apparatus according to an aspect of the present invention is a combined weighing apparatus that includes: a distribution unit configured to distribute articles; a plurality of conveying units configured to convey the articles supplied from the distribution unit; and a plurality of weighing units arranged corresponding to the plurality of conveying units and configured to weigh the articles supplied from the conveying units and controls an operation of each of the conveying units such that the articles supplied to the weighing units become a target supply amount, and includes: detecting units configured to detect heights of the articles on the conveying units; a storing part configured to store relations among the heights of the articles, supply amounts of the conveying units, and feed power of the conveying units; and a control unit configured to control the conveying units with the feed power obtained from the heights detected by the detecting units and the target supply amounts in the relations.

In this combined weighing apparatus, the control unit controls the conveying units with the feed power obtained from the heights detected by the detecting units and the target supply amounts in the relations stored in the storing part. The relations among the heights of the articles, supply amounts of the conveying units, and feed power of the conveying units are stored in the storing part. With this constitution, in the combined weighing apparatus, the conveying units can be controlled with optical feed power for making the target supply amounts. Therefore, in the combined weighing apparatus, the articles can be supplied from the conveying units to the weighing units to become the target supply amounts. As a result, in the combined weighing apparatus, the weighing accuracy is improved.

In an embodiment, the combined weighing apparatus includes a correcting part configured to correct the feed power on the basis of differences between weighed values of the articles weighed in the weighing units and the target supply amounts. Thereby, since the weighed values of the articles weighed in the weighing units are actually reflected on the feed power, the control with higher accuracy is possible.

In an embodiment, the detecting units detect the heights of the articles located adjacent to discharge ends of the conveying units. Thereby, the control unit can detect the heights of the articles just prior to being supplied to the weighing hoppers, that is the articles supplied to the weighing hoppers next. For this reason, the feed power can be set more properly. As a result, the articles can be stably supplied to the weighing hoppers at the target supply amounts.

In an embodiment, the combined weighing apparatus includes an updating part configured to update the relations stored in the storing part during operation. With this constitution, the relations of the storing part can be updated depending on, for instance, a change in supplied state of the articles from the distribution table, or a change in situation such as a change in property of the article. Thereby, the feed power of the conveying units can be controlled on the basis of the updated information. For this reason, even when a change in conveyance situation occurs, the articles can be stably supplied to the weighing hoppers at the target supply amounts.

In an embodiment, when the feed power is defined as P, the height is defined as S, and the supply amount is defined as W, the feed power (P) is calculated on the basis of a formula below: $P = A \times W / S + B$

Here, A and B are coefficients. The above formula is used, the feed power of the conveying units is unambiguously obtained.

In an embodiment, the supply amounts (W), the coefficient (A), and the coefficient (B) are stored in the storing part by corresponding to shapes of the articles and/or conveying passages of the conveying units. Thereby, the control corresponding to the shapes of the articles and/or conveying passages of the conveying units is possible. For this reason, the trouble of an operator changing the setting of the coefficients or the like in each of the shapes of the articles and/or the conveying passages of the conveying units can be avoided.

In an embodiment, the conveying units convey the articles depending on vibration, and the feed power is an amplitude in the conveying units. The amplitude of the vibration is changed in the conveying units that convey the articles depending on the vibration, and thereby the supply amount of the articles can be controlled. Thereby, the control of the supply amount can be performed without depending on an operation capability.

In an embodiment, the plurality of detecting units are provided in conveying directions of the conveying units. Thereby, the heights of the articles in multiple places can be detected. For this reason, the conveying units can be controlled on the basis of an overall state of the articles conveyed by the conveying units.

### Advantageous Effects of Invention

According to the present invention, weighing accuracy is improved in a combined weighing apparatus.

### Brief Description of Drawings

FIG. 1 is a perspective view illustrating a combined weighing apparatus according to a first embodiment.
FIG. 2 is a schematic view illustrating a constitution of the combined weighing apparatus.
FIG. 3 is a block diagram illustrating a hardware constitution of the combined weighing apparatus.
FIG. 4 is a view illustrating the vicinity of a discharge end of a radial feeder.
FIG. 5 is a block diagram illustrating a functional constitution of a conveyance control unit.
FIG. 6 is a graph illustrating a relation between a height and a supply amount.
FIG. 7 is a block diagram illustrating a functional constitution of a control unit of a combined weighing apparatus according to a second embodiment.
FIG. 8 is a view illustrating an example of a table stored in a storage unit.

### Description of Embodiments

Hereinafter, an embodiment will be described with reference to the drawings. In the description of the drawings, the same elements are given the same reference sign, and duplicate descriptions thereof will be omitted. A dimensional ratio in the drawings is not necessarily identical with that of the description.

### [First embodiment]

### (Overall constitution)

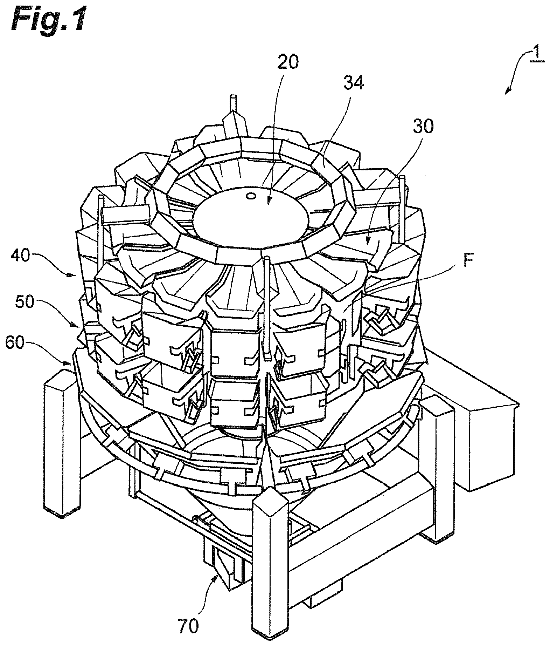

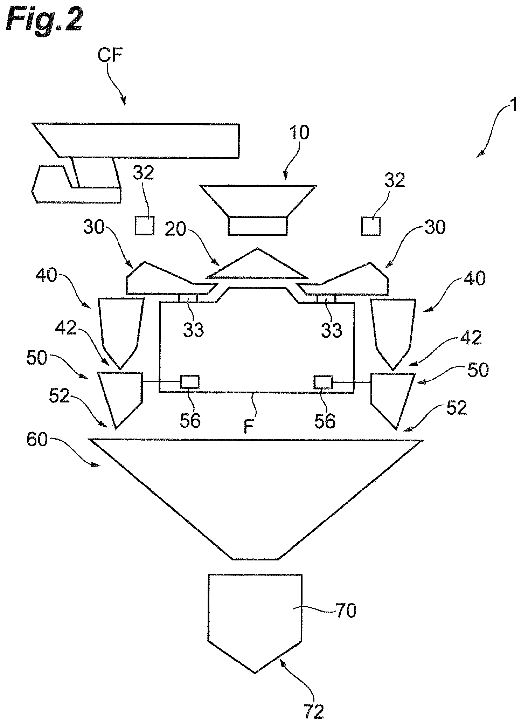

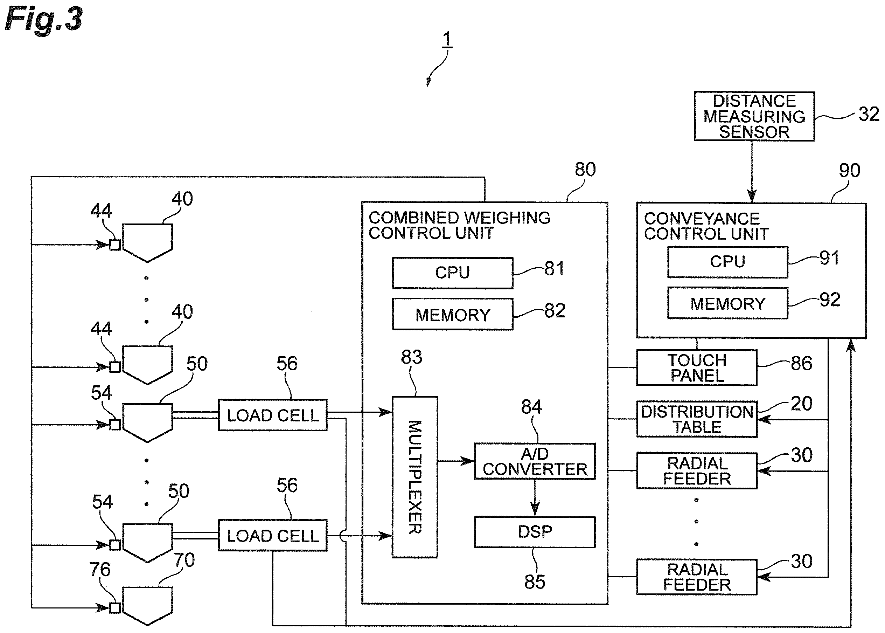

FIG. 1 is a perspective view illustrating a combined weighing apparatus according to a first embodiment. FIG. 2 is a schematic view illustrating a constitution of the combined weighing apparatus. FIG. 3 is a block constitutional diagram of the combined weighing apparatus.

A combined weighing apparatus 1 includes an article supply chute 10, a distribution table (a distribution unit) 20, a plurality of radial feeders (conveyor apparatuses or conveying units) 30, a plurality of pool hoppers 40, a plurality of weighing hoppers 50, a collection discharge chute unit 60, a timing hopper 70, and a combined weighing control unit 80.

The combined weighing apparatus 1 having the above constitution functions as follows. In the combined weighing apparatus 1, articles are conveyed as weighing targets of the combined weighing apparatus 1 by a cross feeder CF. The articles are, for instance, foodstuffs. Articles conveyed by the cross feeder CF are placed in the article supply chute 10. The articles placed in the article supply chute 10 are supplied to the distribution table 20. The distribution table 20 conveys the articles while distributing the articles, and supplies the articles to the plurality of radial feeders 30 arranged around the distribution table 20. The radial feeders 30 convey the articles, which are supplied from the distribution table 20, to the pool hoppers 40 provided corresponding to the radial feeders 30, and supply the articles to the corresponding pool hoppers 40.

The pool hoppers 40 supply the articles to the weighing hoppers 50 arranged below the pool hoppers 40. The combined weighing control unit 80 performs a combined weighing calculation from weighed values of load cells 56 (to be described below), which the weighing hoppers 50 have (weighed values of the articles in the weighing hoppers 50). The combined weighing control unit 80 selects a combination of articles which has a result of the combined weighing calculation that is closest to a target value within a predetermined allowable range. The weighing hoppers 50 included in the selected combination supply the articles to the collection discharge chute unit 60. The collection discharge chute unit 60 supplies the articles to the timing hopper 70. The timing hopper 70 supplies the articles to, for instance, a bag making and packaging machine or the like that is installed on a rear stage of the combined weighing apparatus 1.

### (Detailed constitution)

Next, a constitution of the combined weighing apparatus 1 will be described in detail.

### (Article supply chute)

As illustrated in FIGS. 1 and 2, the article supply chute 10 is disposed below an end of the cross feeder CF that places articles in the article supply chute 10 (an end of a side at which the articles are placed in the article supply chute 10). The article supply chute 10 is disposed above the distribution table 20. The article supply chute 10 is supplied with articles conveyed by the cross feeder CF, and supplies the articles to the distribution table 20.

### (Distribution table)

The distribution table 20 is a table-like member formed in a conical shape. The distribution table 20 is supplied with articles from the cross feeder CF installed above the distribution table 20 via the article supply chute 10. The distribution table 20 is vibrated by, for instance, an electromagnet (not shown) to convey the supplied articles outward in a radial direction while distributing the supplied articles in a circumferential direction. The distribution table 20 supplies articles conveyed to a periphery thereof to the plurality of radial feeders 30 arranged below a peripheral side of the distribution table 20.

### (Radial feeders)

The combined weighing apparatus 1 has the plurality of radial feeders 30 (here, 14 radial feeders). The plurality of radial feeders 30 are arranged around the distribution table 20 in an annular shape. To be specific, the plurality of radial feeders 30 radially extend around the distribution table 20.

The radial feeders 30 include troughs (conveying units) 31, distance measuring sensors (detecting units) 32, drive units 33, and a conveyance control unit 90 (see FIG. 3).

The troughs 31 form conveying passages along which articles are conveyed from the distribution table 20 side to the pool hopper 40 side.

The drive units 33 vibrate the troughs 31 with predetermined feed power P to convey the articles supplied from the distribution table 20 outward in the radial direction (a direction away from the distribution table 20). Each of the troughs 31 supplies the article conveyed to a periphery thereof to each of the pool hoppers 40 disposed below a peripheral side of each of the troughs 31. The drive units 33 are, for example, electromagnets.

The distance measuring sensors 32 are disposed above the troughs 31 to correspond to the troughs 31. That is, in the present embodiment, the number of distance measuring sensors 32 is 14. The distance measuring sensors 32 are mounted on support frames 34 fixed to weighing mechanism frames F, and are located above the troughs 31.

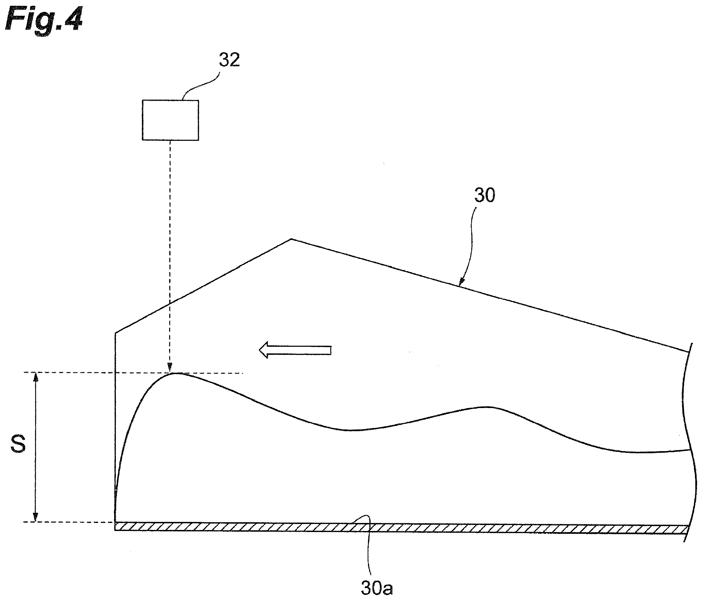

Each of the distance measuring sensors 32 detects a distance between the ranging sensor 32 and an article on the trough 31. The ranging sensor 32, for example, applies a beam toward the article and receives beams reflected by the article to obtain the distance between the ranging sensor 32 and the article. As illustrated in FIG. 4, the ranging sensor 32 detects a distance from an article located in the vicinity of a discharge end of the trough 31. The vicinity of the discharge end is a position that recedes a predetermined distance from a leading end of the trough 31 in a conveying direction of the trough 31. As an example, the vicinity of the discharge end is a position that recedes about 30 mm to 50 mm from the leading end of the trough 31. The distance measuring sensors 32 output detection signals indicating the distances from the detected articles to the conveyance control unit 90.

As illustrated in FIG. 3, the conveyance control unit 90 is connected to the distribution table 20, components of the radial feeders 30 such as the distance measuring sensors 32, the drive units 33, etc., and a touch panel 86. The touch panel 86 is a liquid crystal display (LCD) that has both input and output functions. The touch panel 86 functions as an input unit and an output unit. The touch panel 86 receives inputs such as various settings related to conveyance control. For example, the touch panel 86 receives inputs of operation parameters such as vibration intensities of the radial feeders 30, vibration times of the radial feeders 30, and the like. The touch panel 86 of the present embodiment also functions as both an input unit and an output unit in the combined weighing control unit 80.

The conveyance control unit 90 controls the drive units 33 of the radial feeders 30 on the basis of operation parameters such as vibration intensities of the distribution table 20 and the radial feeders 30 and/or vibration times of the radial feeders 30, which are input from the touch panel 86. Thereby, the conveyance control unit 90 vibrates the troughs 31. A target supply amount TW of articles supplied from the radial feeders 30 to the weighing hoppers 50 via the pool hoppers 40 is included in the operation parameters. The target supply amount TW is a target amount (a constant value) of articles to be supplied to the weighing hoppers 50 per unit of time. The target supply amount TW is set for each article.

The conveyance control unit 90 has a central processing unit (CPU) 91 and a memory 92 such as a read only memory (ROM), a random access memory (RAM), or the like.

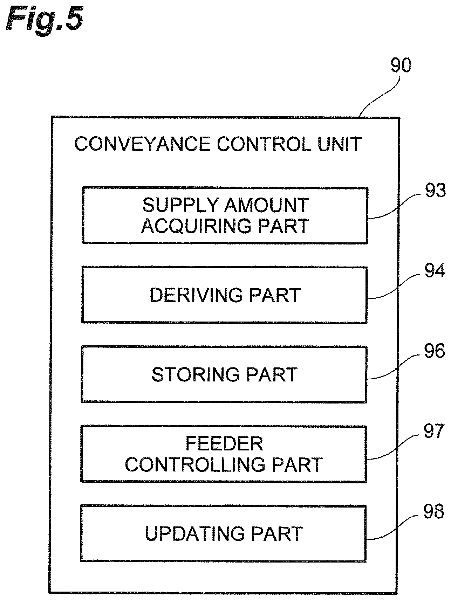

FIG. 5 is a block diagram illustrating a functional constitution of the control unit. As illustrated in FIG. 5, the conveyance control unit 90 has a supply amount acquiring part 93, a deriving part 94, a storing part 96, a feeder controlling part (a controlling part) 97, and an updating part 98. The conveyance control unit 90 is a conceptual portion that executes various control processes in the radial feeders. Here, the supply amount acquiring part 93, the deriving part 94, the feeder controlling part 97, and the updating part 98 are configured as, for instance, software in which a program stored in a ROM is loaded on a RAM and is executed by the CPU 91.

The supply amount acquiring part 93 acquires an actually supplied supply amount W from the corresponding trough 31. To be specific, the supply amount acquiring part 93 acquires weighed values G from signals input from the load cells 56 connected to the weighing hoppers 50 (to be described below). The acquired weighed values G are sent to the deriving part 94 as the supply amounts W.

The deriving part 94 changes the feed power P from the drive units 33 multiple times and conveys the articles to the troughs 31. Thereby, the deriving part 94 derives a relation among a height S of the article, the supply amount W of the trough 31, and the feed power P of the trough 31, that is, formula (1) below. $P = A \times W / S + B$ (1)

Here, the feed power P is an amplitude of vibration of the radial feeder 30. When a value of the feed power P is small, the amplitude is reduced. For this reason, the supply amount of articles supplied from the radial feeder 30 to the weighing hopper 50 (the pool hopper 40) is reduced. When the value of the feed power P is great, the amplitude is increased. For this reason, the supply amount of the articles supplied from the radial feeder 30 to the weighing hopper 50 is increased.

As illustrated in FIG. 4, the height S is a distance between a bottom 30a of the radial feeder 30 and an upper portion of an article in the vicinity of the discharge end of the radial feeder 30. The supply amount W is an amount of articles supplied from the radial feeder 30 to the weighing hopper 50 via the pool hopper 40.

In formula (1) above, "A" and "B" are coefficients, and are values set corresponding to a shape of the radial feeder 30 and/or a type of article. The deriving part 94 derives the coefficients A and B.

The deriving part 94 vibrates the trough 31 with respect to the drive unit 33 with the predetermined feed power P to convey the article supplied from the distribution table 20 outward in the radial direction. On this occasion, the deriving part 94 acquires the height S and the weighed value G at a given time. The height S is a value indicated by the ranging sensor 32, and the weighed value G is a value acquired by the supply amount acquiring part 93.

The deriving part 94 performs a smoothing process on heights S from data measured in this way (for instance, calculates a moving average of 10 sections), and obtains a smoothed height Sm. Likewise, the deriving part 94 performs a smoothing process on the weighed values G (for instance, calculates a moving average of 10 sections), and obtains a smoothed weighed value Gm. The deriving part 94 derives formula (2) below, which is an approximate straight line indicating a relation between the smoothed height Sm and the smoothed weighed value Gm. $Gm = aSm$ (2)

In formula (2) above, "a" is a slope obtained from the relation between the smoothed height Sm and the smoothed weighed value Gm.

Here, according to the above formula (1), the slope a and the feed power P have a relation of formula (3) below. $a = \left(1/A\right) P - B / A$ (3)

The deriving part 94 vibrates the trough 31 with respect to the drive unit 33 with the feed power P different from a previous feed power to convey the article. On this occasion, the deriving part 94 measures the height S and the weighed value G at a given time, and calculates the smoothed height Sm and the smoothed weighed value Gm. The deriving part 94 derives a relation between "a," the slope of the approximate straight line in formula (2) above, and the feed power P. That is, the deriving part 94 derives the coefficients A and B.

The storing part 96 stores the relation among the height S of the article, the supply amount W of the radial feeder 30, and the feed power P of the radial feeder 30 from the coefficients A and B derived by the deriving part 94. To be specific, the above formula (1) is stored in the storing part 96.

The feeder controlling part 97 controls the feed power P of the radial feeder 30. The feeder controlling part 97 controls the radial feeder 30 (the drive unit 33) with the feed power P obtained from the height S of the article based on the distance detected by the ranging sensor 32 and the supply amount W, which became a set target supply amount, using the above formula (1). The feeder controlling part 97 calculates the height S of the article on the basis of the distance indicated by the detection signal sent from the ranging sensor 32. To be specific, the feeder controlling part 97 calculates the height S of the article on the basis of a difference between the distance from the bottom 30a of the radial feeders 30 to the ranging sensor 32 and the distance indicated by the detection signal.

The feeder controlling part 97 substitutes the calculated height S of the article and the supply amount W, which became the target supply amount, into formula (1) and calculates the feed power P. The feeder controlling part 97 controls a continuous motion of the radial feeder 30 with the calculated feed power P. That is, the feeder controlling part 97 controls the motion of the radial feeder 30 during vibration.

The updating part 98 updates formula (1) stored in the storing part 96 during operation. The updating part 98 is different from the deriving part 94 in that it updates formula (1) during operation. The expression "during operation" refers to, for instance, a state in which an article is supplied to the distribution table 20 and is conveyed by the radial feeder 30. The updating part 98 changes the coefficients A and B, and updates the above formula (1).

The height S of the article and the weighed value G of the load cell 56 has a relation shown in formula (5) below. $G = aS$ (5)

In formula (5) above, "a" is a slope obtained from the relation between the height S and the weighed value G in a predetermined period. The updating part 98 calculates the slope a in formula (5) on the basis of the height S and the weighed value G obtained during operation. The updating part 98 calculates the slope a in at least two predetermined periods. The slope a and the feed power P have a relation of formula (6) below. $a = \left(1/A\right) P - B / A$ (6)

The updating part 98 calculates the coefficients A and B from the feed power P and the slope a in a current operation state. The updating part 98 updates the above formula (1) using the calculated coefficients A and B.

### (Pool hoppers)

The combined weighing apparatus 1 has the same number of radial feeders 30 and pool hoppers 40. As illustrated in FIG. 4, the pool hoppers 40 are arranged below peripheries of the radial feeders 30 in a one-to-one correspondence. The pool hoppers 40 temporarily store articles supplied from the radial feeders 30 arranged thereabove.

Each of the pool hoppers 40 has a PH gate 42. The PH gates 42 are provided at lower portions of the pool hoppers 40. The PH gates 42 are opened so that the pool hoppers 40 supply the articles in the pool hoppers 40 to the weighing hoppers 50 disposed below the pool hoppers 40. A link mechanism (not shown) is operated by a stepping motor 44 to open and close each of the PH gates 42. An operation of the stepping motor 44 is controlled by the combined weighing control unit 80 (to be described below).

### (Weighing hoppers)

The combined weighing apparatus 1 has the same number of pool hoppers 40 and weighing hoppers 50. The weighing hoppers 50 are arranged below the pool hoppers 40 in one-to-one correspondence. The weighing hoppers 50 weigh masses of the articles supplied from the pool hoppers 40, that is masses of the articles supplied from the radial feeders 30 via the pool hoppers 40.

Each of the weighing hoppers 50 has a WH gate 52. The WH gates 52 are provided at lower portions of the weighing hoppers 50. The WH gates 52 are opened such that the weighing hoppers 50 supply the articles in the weighing hoppers 50 to the collection discharge chute unit 60. A link mechanism (not shown) is operated by a stepping motor 54 to open and close the WH gates 52. An operation of the stepping motor 54 is controlled by the combined weighing control unit 80 (to be described below).

Each of the weighing hoppers 50 has the load cell (the weighing unit) 56 for weighing the article held in each of the weighing hoppers 50. The load cell 56 is an example of a weighing mechanism. A weighed result of the load cell 56 is sent to a multiplexer 83 of the combined weighing control unit 80 (to be described below) via an amplifier (not shown) as a weighing signal.

### (Collection discharge chute unit)

The collection discharge chute unit 60 is an example of a discharge path member. After combined weighing based on the weighed results of the load cells 56, a combination of weighed articles selected from the weighing hoppers 50 are supplied to the collection discharge chute unit 60. The collection discharge chute unit 60 collects the articles supplied from the weighing hoppers 50 and supplies the collected articles to the timing hopper 70.

After the combined weighing based on the weighed results of the load cells 56, the combination of weighed articles selected from the weighing hoppers 50 are supplied to an outer chute 64. The outer chute 64 collects the articles supplied from the weighing hoppers 50 and supplies the collected articles to the timing hopper 70.

### (Timing hopper)

The timing hopper 70 delivers the articles supplied from the collection discharge chute unit 60 to a rear-stage bag making and packaging machine or the like. The timing hopper 70 has a gate 72. The gate 72 is provided at a lower portion of the timing hopper 70. The gate 72 is opened such that the timing hopper 70 supplies the articles in the timing hopper 70 to the rear-stage bag making and packaging machine or the like. A link mechanism74 is operated by a stepping motor 76 or the like to open and close the gate 72. An operation of the stepping motor 76 is controlled by the combined weighing control unit 80 (to be described below).

### (Combined weighing control unit)

As illustrated in FIG. 3, the combined weighing control unit 80 has a central processing unit (CPU) 81 and a memory 82 such as a read only memory (ROM), a random access memory (RAM), or the like. In addition, the combined weighing control unit 80 has a multiplexer 83, an A/D converter 84, and a digital signal processor (DSP) 85.

The multiplexer 83 selects one of weighing signals of the load cells 56 according to an instruction of the DSP 85 and sends the weighing signal to the A/D converter 84. The A/D converter 84 converts the weighing signal (an analog signal) received from the multiplexer 83 into a digital signal according to a timing signal sent from the DSP 85 and sends the digital signal to the DSP 85. The DSP 85 performs filtering on the digital signal sent from the A/D converter 84.

The combined weighing control unit 80 is connected to the components of the combined weighing apparatus 1 such as the stepping motor 44, the stepping motor 54, the stepping motor 76, and the touch panel 86. The touch panel 86 is a liquid crystal display (LCD) that has both input and output functions. The touch panel 86 functions as an input unit and an output unit. The touch panel 86 receives inputs such as various settings related to the combined weighing.

The combined weighing control unit 80 performs a combined weighing calculation based on the weighed values of articles in the weighing hoppers 50. To be specific, first, the combined weighing control unit 80 calculates a mass of an article held in each of the weighing hoppers 50 using the signal filtered by the DSP 85. The combined weighing control unit 80 performs the combined weighing calculation in which the sum of masses of the articles is closest to a target value within a predetermined target mass range. Further, the combined weighing control unit 80 decides on a combination of the weighing hoppers 50 on the basis of the result of the combined weighing calculation. The combined weighing control unit 80 controls the operations of the stepping motors 54 so that the WH gates 52 of the decided weighing hoppers 50 are opened. In addition, the combined weighing control unit 80 determines whether or not any of the weighing hoppers 50 is empty. When any of the weighing hoppers 50 is empty, the combined weighing control unit 80 operates the stepping motors 44 to open the PH gates 42 of the pool hoppers 40 disposed above the weighing hoppers 50. The combined weighing control unit 80 controls opening/closing of the gate 72 of the timing hopper 70.

Next, an operation of the conveyance control unit 90 will be described. For example, when a relational expression deriving mode is enabled by a user, the conveyance control unit 90 initiates operations of the distribution table 20 and the radial feeders 30. At a time of the operation initiation, the conveyance control unit 90 operates the radial feeders 30 with the feed power P, which is previously set as an initial value.

The conveyance control unit 90 controls the drive units 33 to vibrate the troughs 31 with the predetermined feed power P. Due to this action, the conveyance control unit 90 conveys articles supplied from the distribution table 20 outward in the radial direction. At this time, the conveyance control unit 90 measures the heights S and the weighed values G for a given time. The conveyance control unit 90 performs a smoothing process on the heights S from data measured in this way (for instance, calculates a moving average of 10 sections), and obtains the smoothed height Sm. Similarly, the conveyance control unit 90 performs a smoothing process on the weighed values G (for instance, calculates a moving average of 10 sections), and acquires the smoothed weighed value Gm. The deriving part 94 derive the above formula (2), which is an approximate straight line indicating a relation between the smoothed height Sm and the smoothed weighed value Gm.

Next, the conveyance control unit 90 controls the drive units 33 to vibrate the troughs 31 with the feed power P different from the previous feed power. At this time, the conveyance control unit 90 measures the heights S and the weighed values G for a given time, and calculates the smoothed height Sm and the smoothed weighed value Gm. A relation between a slope "a" of the approximate straight line in the above formula (2) and the feed power P is derived. That is, the coefficients A and B are derived. The conveyance control unit 90 stores the relational expression indicated in the above formula (1) derived in this way in the storing part 96.

Next, an operation of the conveyance control unit 90 when a normal mode, that is a combined weighing process, is performed will be described. When a signal for initiating an operation of the combined weighing apparatus 1 is input, the conveyance control unit 90 initiates operations of the distribution table 20 and the radial feeders 30. At a time of the operation initiation, the conveyance control unit 90 operates the radial feeders 30 with the feed power P, which is previously set as an initial value.

When articles located near the discharge ends of the radial feeders 30 are detected by the distance measuring sensors 32, the conveyance control unit 90 receives detection signals sent from the distance measuring sensors 32. The conveyance control unit 90 calculates the heights S of the articles on the basis of the detection signals. The conveyance control unit 90 inputs the calculated heights S of the articles and the supply amount W, which is a target supply amount, into the above formula (1), and calculates the feed power P. The conveyance control unit 90 controls the radial feeders 30 with the calculated feed power P. The conveyance control unit 90 controls the operation of each of the radial feeders 30 according to the same process.

When the articles start to be weighed in the load cells 56 of the weighing hoppers 50, the conveyance control unit 90 updates the coefficients A and B in the above formula (1) on the basis of the weighed values and the heights S. To be specific, the conveyance control unit 90 receives weighing signals sent from the load cells 56 within a predetermined period. The conveyance control unit 90 calculates the slope "a" on the basis of the above formula (5) using weighed values indicated by the received weighing signals and the heights S of the articles. The conveyance control unit 90 obtains the coefficients A and B from the above formula (6) using the slope "a" obtained within at least two predetermined periods. The conveyance control unit 90 updates the above formula (1) with the obtained coefficients A and B.

As described above, in the combined weighing apparatus 1 according to the first embodiment, the drive units 33 can be controlled with the optimal feed power P for achieving the target supply amounts TW on the basis of the feed power P that can be obtained from the relations among the heights S of the articles, a supply amount of the troughs 31, and the feed power P of the troughs 31, which are automatically derived by the deriving part 94. Further, the deriving part 94 can automatically derive the relations among the heights S of the articles, the supply amount W of the troughs 31, and the feed power P of the troughs 31 even in an unknown weighing target of a new product or the like. In the combined weighing apparatus 1, since these relations are used for conveyance control, the target supply amount TW of articles can be supplied from the troughs 31. These radial feeders 30 are used in the combined weighing apparatus 1 to improve weighing accuracy thereof.

In the combined weighing apparatus 1, the feeder controlling part 97 controls the radial feeders 30 with the feed power P obtained from the heights S based on the detected signals detected by the distance measuring sensors 32 and the supply amounts W, which are the target supply amounts in the above formula (1) stored in the storing part 96. The above formula (1), which indicates the relations among the heights S of the articles, the supply amount W of the radial feeders 30, and the feed power P of the radial feeders 30, is stored in the storing part 96. With this constitution, in the combined weighing apparatus 1, the radial feeders 30 can be controlled with the optimal feed power P for achieving the target supply amounts. Therefore, in the combined weighing apparatus 1, the target supply amount of articles can be supplied from the radial feeders 30 to the weighing hoppers 50. As a result, in the combined weighing apparatus 1, the weighing accuracy is improved, and an operating rate is also improved.

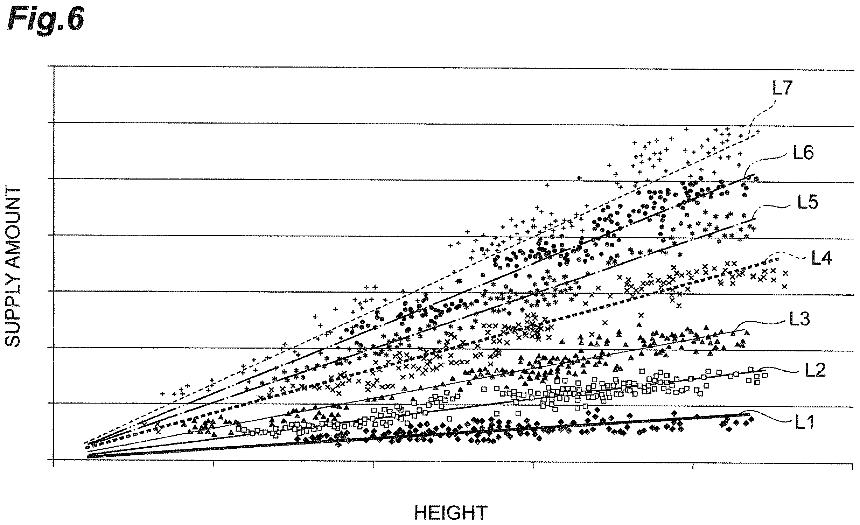

FIG. 6 is a graph illustrating a relation between a height and a supply amount. In FIG. 6, the horizontal axis indicates heights of articles on the radial feeders 30, and the vertical axis indicates a supply amount of articles supplied to the weighing hoppers 50. Straight lines L1 to L7 illustrated in FIG. 6 are regression lines (approximately straight lines) of results obtained when the radial feeders 30 are operated for only a predetermined time in a case in which amplitudes of the radial feeders 30 differ.

As illustrated in FIG. 6, in the combined weighing apparatus 1 of the first embodiment, even when amplitudes are changed, a proportional relation between the heights S of articles on the radial feeders 30 and the supply amount W of articles supplied to the weighing hoppers 50 is obtained. That is, in the combined weighing apparatus 1, by detecting the heights S of the articles on the radial feeders 30 and deciding the feed power P depending on the heights S to control the radial feeders 30, the supply amount W, which is the target supply amount, are obtained. Therefore, in the combined weighing apparatus 1, for example in a constitution in which 14 weighing hoppers 50 are provided, since a certain amount of articles can be supplied to each of the weighing hoppers 50 in good balance, seven weighing hoppers 50 can be selected. Thereby, the number of combinations of the weighing hoppers 50 can be maximized. As a result, in the combined weighing apparatus 1, the weighing accuracy and the operating rate are improved.

In the present embodiment, the distance measuring sensors 32 detect distances between the distance measuring sensors 32 and articles on the radial feeders 30. The conveyance control unit 90 detects the heights S of articles located near the discharge ends of the radial feeders 30 on the basis of the distances. Thereby, the conveyance control unit 90 can detect the heights S of the articles just before the articles are supplied to the weighing hoppers 50, that is the articles that will be supplied to the weighing hoppers 50 next. For this reason, the feed power P can be more properly set. As a result, the target supply amount of articles can be stably supplied to the weighing hoppers 50 at.

In the present embodiment, the updating part 98 for updating the above formula (1) stored in the storing part 96 during operation is provided. With this constitution, the above formula (1) can be updated depending on, for instance, a change in a supply state of an article from the distribution table 20, a change in a situation such as a change in a property of the article, or a change in a shape of the radial feeder 30. Thereby, the feed power P of the radial feeders 30 can be controlled on the basis of the above formula (1) which is updated. For this reason, even when a change in a conveyance situation such as a change in the supply state from an upstream side, a change in a property (a large chip, a small chip, etc.) of the article, a flavor deposition, a change in a temperature and humidity, or the like occurs, the target supply amount of articles can be stably supplied to the weighing hoppers 50.

In the present embodiment, when the feed power is defined as P, the height is defined as S, and the supply amount is defined as W, the feed power P is calculated on the basis of the above formula (1). In the combined weighing apparatus 1, the above formula (1) is used to unambiguously obtain the feed power P of the radial feeders 30.

In the present embodiment, the radial feeders 30 convey articles depending on vibration. The feed power P is an amplitude in the radial feeders 30. An amplitude of the vibration is changed in the radial feeders 30 that convey articles depending on the vibration to control the supply amount of the articles. Thereby, control of the supply amount can be performed without depending on an operation capability.

In the present embodiment, the feeder controlling part 97 controls the feed power P of the radial feeders 30 that are continuously operated. In this constitution, since the feed power P of the radial feeders 30 is controlled in a state in which articles are continuously supplied to the weighing hoppers 50, the weighing is continuously performed. For this reason, a drop in weighing efficiency can be suppressed.

In the above embodiment, the example in which the conveyance control unit 90 and the combined weighing control unit 80 are separately provided has been described, but the present invention is not limited thereto. For example, the functions which the conveyance control unit 90 and the combined weighing control unit 80 have may be concentrated in one control unit.

### [Second embodiment]

Next, a second embodiment will be described. A combined weighing apparatus 1 according to the second embodiment is different from that of the first embodiment in that a control unit 100 is different in constitution from the combined weighing control unit 80 of the first embodiment, and the conveyance control unit 90 is not provided.

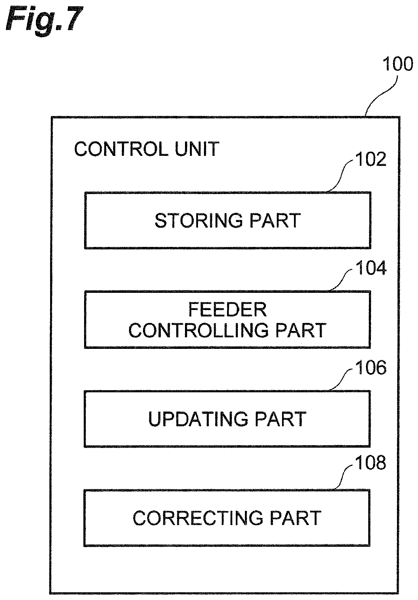

FIG. 7 is a block diagram illustrating a functional constitution of the combined weighing apparatus according to the second embodiment. As illustrated in FIG. 7, the control unit 100 has a storing part 102, a feeder controlling part 104, an updating part 106, and a correcting part 108.

The storing part 102 stores relations among heights S of articles, a supply amount W of radial feeders 30, and feed power P of the radial feeders 30. To be specific, formula (8) below is stored in the storing part 102. $P = A \times W / S + B$ (8)

The feeder controlling part 104 controls the feed power P of the radial feeders 30. The feeder controlling part 104 controls the radial feeders 30 with the feed power P obtained from the heights S of the articles based on the distances detected by the distance measuring sensors 32 and the supply amounts W that art set target supply amounts using the above formula (8). The feeder controlling part 104 calculates the heights S of the articles on the basis of distances indicated by detection signals sent from the distance measuring sensors 32. To be specific, the feeder controlling part 104 calculates the heights S of the articles on the basis of differences between distances from bottoms 30a of the radial feeders 30 to the distance measuring sensors 32 and the distances indicated by the detection signals.

The feeder controlling part 104 substitutes the above formula (8) with the calculated heights S of the articles and the supply amount W, which is the target supply amount, and calculates the feed power P. The feeder controlling part 104 controls operations of the radial feeders 30 continuously operated with the calculated feed power P. That is, the feeder controlling part 104 controls the operations of the radial feeders 30 during vibration.

The updating part 106 updates the above formula (8) stored in the storing part 102 during operation. The expression "during operation" refers to, for instance, a state in which articles are supplied to a distribution table 20 and are conveyed by the radial feeders 30. The updating part 106 changes coefficients A and B, and updates the above formula (8).

The heights S of the articles and weighed values G of load cells 56 have a relation shown in formula (9) below. $G = aS$ (9)

In the above formula (9), "a" is a slope obtained from relations between the heights S and the weighed values G in a predetermined period. The updating part 106 calculates the slope a from the above formula (9) on the basis of the heights S and the weighed values G obtained during operation. The updating part 106 calculates the slope a in at least two predetermined periods. The slope a and the feed power P have a relation of formula (10) below. $a = \left(1/A\right) P - B / A$ (10)

The updating part 106 calculates the coefficients A and B from the feed power P and the slope a in a current operation state. The updating part 106 updates the above formula (8) using the calculated coefficients A and B.

The correcting part 108 corrects the feed power P on the basis of differences between weighed values of articles weighed in the load cells 56 and the target supply amount. The correcting part 108 compares the weighed values of the articles weighed in the load cells 56 and the target supply amount, and corrects the feed power P when a difference exceeding a predetermined range is present between the weighed values and the target supply amount. The predetermined range is set depending on the articles.

To be specific, the correcting part 108 corrects the feed power P calculated by the feeder controlling part 104 depending on the differences between the weighed values and the target supply amount. The correcting part 108 reduces a value of the feed power P when the weighed values exceed the predetermined range and are greater than the target supply amount. The correcting part 108 increases the value of the feed power P when the weighed values exceed the predetermined range and are smaller than the target supply amount. The feeder controlling part 104 controls the operations of the radial feeders 30 with the feed power P corrected by the correcting part 108.

Subsequently, an operation of the control unit 100 will be described. When a signal for initiating operation of the combined weighing apparatus 1 is input, the control unit 100 initiates operations of the distribution table 20 and the radial feeders 30. At a time of the operation initiation, the control unit 100 operates the radial feeders 30 with the feed power P, which is previously set as an initial value.

When articles located near discharge ends of the radial feeders 30 are detected by the distance measuring sensors 32, the control unit 100 receives detection signals sent from the distance measuring sensors 32. The control unit 100 calculates the heights S of the articles on the basis of the detection signals. The control unit 100 calculates the feed power P with the heights S of the articles and the supply amount W, which is a target supply amount, using the above formula (8) stored in the storing part 102. The control unit 100 controls the radial feeders 30 with the calculated feed power P. The control unit 100 controls the operation of each of the radial feeders 30 according to the same process.

When the articles start to be weighed in the load cells 56 of weighing hoppers 50, the control unit 100 updates the above formula (8) on the basis of the weighed values and the heights S. To be specific, when the control unit 100 receives weighing signals sent from the load cells 56 within a predetermined period, the control unit 100 calculates the slope "a" on the basis of the above formula (9) using weighed values indicated by the received weighing signals and the heights S of the articles. The control unit 100 obtains the coefficients A and B from the above formula (10) using the slope "a" obtained within at least two predetermined periods. The control unit 100 updates the above formula (8) with the obtained coefficients A and B.

When the weighing signals sent from the load cells 56 are received, the control unit 100 obtains differences between the weighed values indicated by the weighing signals and the target supply amount (the supply amount W), and corrects the feed power P of the radial feeders 30 when the differences exceed a predetermined range. The control unit 100 corrects the feed power P calculated by the above formula (8) depending on the differences between the weighed values and the target supply amount.

To be specific, for example, when the weighed values exceed the predetermined range and are greater than the target supply amount, the control unit 100 corrects the feed power P so that the value of the feed power P is smaller than that of the calculated feed power P. Thereby, amplitudes of the radial feeders 30 controlled by the feeder controlling part 104 are reduced, and the supply amount of articles supplied from the radial feeders 30 to the weighing hoppers 50 via pool hoppers 40 is reduced. When the weighed values exceed the predetermined range and are smaller than the target supply amount, the control unit 100 corrects the feed power P so that the value of the feed power P is greater than that of the calculated feed power P. Thereby, the amplitudes of the radial feeders 30 controlled by the feeder controlling part 104 are increased, and the supply amount of the articles supplied from the radial feeders 30 to the pool hoppers 40 is increased.

The control unit 100 performs a combined weighing calculation based on the weighed values of articles in the load cells 56 of the weighing hoppers 50. To be specific, first, the control unit 100 calculates masses of articles held in the weighing hoppers 50 using a signal filtered by a DSP 85 and performs the combined weighing calculation in which the sum of the masses is closest to a target value within a predetermined target mass range. The control unit 100 decides on a combination of the weighing hoppers 50 on the basis of the result of the combined weighing calculation, and controls operations of stepping motors 54 such that WH gates 52 of the decided weighing hoppers 50 are opened. When any of the weighing hoppers 50 is empty, the control unit 100 operates stepping motors 44 to open PH gates 42 of the pool hoppers 40 disposed above the weighing hoppers 50. When articles from the decided weighing hoppers 50 are supplied to a timing hopper 70, the control unit 100 controls a stepping motor 76 so that of a gate 72 of the timing hopper 70 is opened.

As described above, in the combined weighing apparatus 1 according to the second embodiment, the feeder controlling part 104 controls the radial feeders 30 with the feed power P obtained from the heights S based on the detected signals detected by the ranging sensor 32 and the supply amounts W that are the target supply amounts in the above formula (8) stored in the storing part 102. The above formula (8) indicating the relations among the heights S of articles, the supply amount W of radial feeders 30, and the feed power P of the radial feeders 30 is stored in the storing part 102. With this constitution, in the combined weighing apparatus 1, the radial feeders 30 can be controlled with optimal feed power P for achieving the target supply amount.

The combined weighing apparatus 1 includes the correcting part 108 for correcting the feed power on the basis of the differences between the weighed values of the articles weighed in the weighing hoppers 50 and the target supply amounts of the weighing hoppers 50. Thereby, since the weighed values of the articles in the weighing hoppers 50 are actually reflected on the feed power P, highly accurate control is possible. As a result, in the combined weighing apparatus 1, weighing accuracy can be improved.

In the present embodiment, the distance measuring sensors 32 detect distances between the distance measuring sensors 32 and articles on the radial feeders 30. The control unit 100 detects the heights S of articles located near the discharge ends of the radial feeders 30 on the basis of the distances. Thereby, the control unit 100 can detect the heights S of the articles just before the articles are supplied to the weighing hoppers 50, that is the articles that will be supplied to the weighing hoppers 50 next. For this reason, the feed power P can be more properly set. As a result, the target supply amount of articles can be stably supplied to the weighing hoppers 50.

In the present embodiment, the updating part 106 for updating the above formula (8) stored in the storing part 102 during operation is provided. With this constitution, for example, the above formula (8) is updated depending on, for instance, a change in a supply state of an article from the distribution table 20, a change in a situation such as a change in a property of the article, or a change in a shape of the radial feeder 30. Thereby, the feed power P of the radial feeders 30 can be controlled on the basis of the above formula (8) which is updated. For this reason, even when a change in a conveyance situation such as a change in the supply state from an upstream side, a change in a property (a large chip, a small chip, etc.) of the article, a flavor deposition, a change in a temperature and humidity, or the like occurs, the target supply amount of articles can be stably supplied to the weighing hoppers 50.

In the present embodiment, when the feed power is defined as P, the height is defined as S, and the supply amount is defined as W, the feed power P is calculated on the basis of the above formula (8). In the combined weighing apparatus 1, the above formula (8) is used to unambiguously calculate the feed power P of the radial feeders 30.

In the present embodiment, the radial feeders 30 convey articles depending on vibration. The feed power P is an amplitude in the radial feeders 30. An amplitude of the vibration is changed in the radial feeders 30 that convey articles depending on the vibration to control the supply amount of the articles. Thereby, the control of the supply amount can be performed without depending on an operation capability.

In the present embodiment, the feeder controlling part 104 controls the feed power P of the radial feeders 30 that are continuously operated. In this constitution, since the feed power P of the radial feeders 30 is controlled in a state in which articles are continuously supplied to the weighing hoppers 50, the weighing is continuously performed. For this reason, a drop in weighing efficiency can be suppressed.

### [Third embodiment]

Next, a third embodiment will be described. In a combined weighing apparatus 1 according to the third embodiment, relations among heights S of articles, a supply amount W of radial feeders 30, and feed power P of the radial feeders 30 are stored in a storing part 102 of a control unit 100 like in the second embodiment, but they are different from that of the second embodiment.

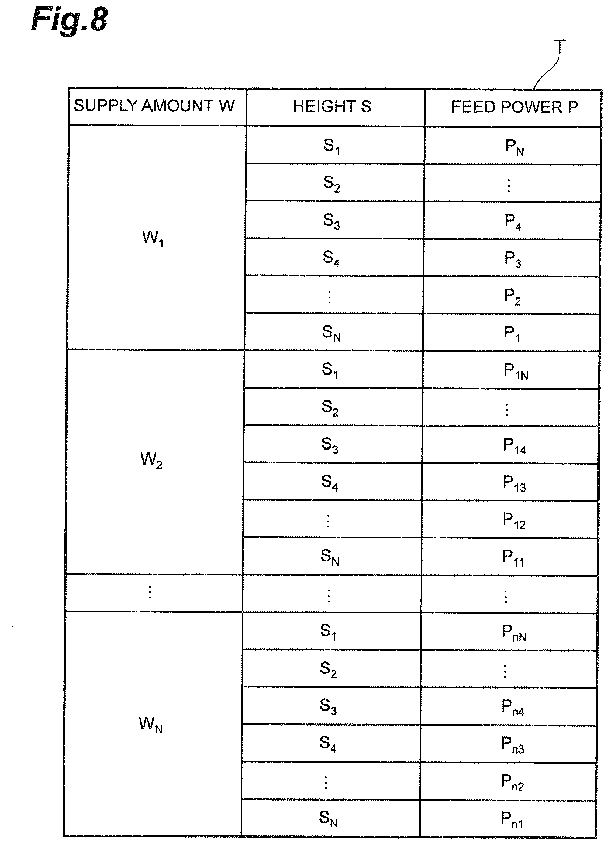

The storing part 102 stores the relations among the heights S of the articles, the supply amount W of the radial feeders 30, and the feed power P of the radial feeders 30. To be specific, a table T shown in FIG. 8 is stored in the storing part 102 as information. As illustrated in FIG. 8, a table T has values of the supply amount W (W1, W2, ..., WN), values of the heights S (S1, S2, ..., SN) of the articles, and values of the feed power P (PN, PN-1, ..., PI) corresponding to one another. The values of the supply amount W have a relation of W1<W2<...<WN. The heights S have a relation of S1 <S2<...<SN. The values of the feed power P have a relation of P1<P2<...<PN.

In the table T shown in FIG. 8, for example when the supply amount W is defined as "W1," "P4" among the values of the feed power P is selected when the height S of the article is "S3." In other words, if the feed power P is defined as "P4" when the height S of the article is "S3," the supply amount W is "W1."

The feed power P stored in the storing part 102 is calculated by the above formula (8). The table T, in which the feed power P calculated using the coefficients A and B of the initial values is stored, is stored in the storing part 102 as an initial table T. Each piece of information of the table T can be updated (rewritten).

A feeder controlling part 104 controls the feed power P of the radial feeders 30. The feeder controlling part 104 controls the radial feeders 30 with the feed power P obtained from the heights S of the articles based on of the distances detected by distance measuring sensors 32 and the supply amounts W that are set target supply amounts in the table T. The feeder controlling part 104 extracts the feed power P from the heights S of the articles and the supply amount W, which is the set target supply amount, with reference to the table T. To be specific, for example when the supply amount W, which is the set target supply, amount is "W1" and the calculated height S is "S3," the feeder controlling part 104 extracts "P4" as the feed power P. The feeder controlling part 104 controls operations of the radial feeders 30 with the feed power P extracted from the table T.

The updating part 106 updates the table T stored in the storing part 102 during operation. The updating part 106 changes the coefficients A and B in the above formula (1) to calculate the feed power P, and updates the table T. The updating part 106 calculates the coefficients A and B on the basis of the above formulae (9) and (10). The updating part 106 calculates the feed power P using the calculated coefficients A and B and the above formula (8), and updates the table T with the feed power P.

The correcting part 108 corrects the feed power P extracted from the table T as described above depending on the difference between the weighed value and the target supply amount. The correcting part 108 reduces a value of the feed power P when the weighed value exceeds a predetermined range and is greater than the target supply amount. The correcting part 108 increases the value of the feed power P when the weighed value exceeds the predetermined range and is smaller than the target supply amount. The feeder controlling part 104 controls the operations of the radial feeders 30 with the feed power P corrected by the correcting part 108.

As described above, in the combined weighing apparatus 1 according to the third embodiment, the feeder controlling part 104 controls the radial feeders 30 with the feed power P obtained from the heights S based on of the detected signals detected by the distance measuring sensors 32 and the supply amounts W becoming the set target supply amounts in the table T stored in the storing part 102. The table T in which the relations among the heights S of the articles, the supply amounts W of the radial feeders 30, and the feed power P of the radial feeders 30 are shown is stored in the storing part 102. With this constitution, in the combined weighing apparatus 1, the radial feeders 30 can be controlled by optimal feed power P for making the target supply amounts.

The correcting part 108 may be a form in which the feed power P extracted from the table T is corrected depending on the difference between the weighed value and the target supply amount, or a form in which the feed power P stored in the table T is corrected (updated).

The present invention is not limited to the above embodiments. For example, in the above embodiments, the distance measuring sensors 32 acting as the detecting units have been described by way of example. However, the detecting units are not limited to the distance measuring sensors 32. The detecting units may be, for instance, cameras, or the like.

It does not matter that the detecting units are interfaces for acquiring information related to the heights detected ranging devices disposed outside. That is, the detecting units have only to have a function of acquiring the information related to the heights of the articles. In this case, the detecting units themselves need not detect or measure the information related to the heights of the articles.

In the above embodiment, the form in which the distance measuring sensors 32 are provided corresponding to the radial feeders 30 one by one has been described by way of example. However, a plurality of distance measuring sensors 32 may be provided in the conveying directions of the radial feeders 30. Thereby, the heights of the articles in multiple places can be detected. For this reason, the radial feeders 30 can be controlled on the basis of an overall state of the articles conveyed by the radial feeders 30.

In the above embodiment, the form in which the distance measuring sensors 32 are provided corresponding to the radial feeders 30 one by one has been described by way of example. However, the distance measuring sensors 32 may not be provided corresponding to the radial feeders 30. For example, the distance measuring sensors 32 may be provided for the radial feeders 30 arranged radially at an interval, for instance, for one between the two radial feeders 30. Sometimes the supply amount of the articles supplied from the distribution table 20 does not vary considerably in the neighboring radial feeders 30. Meanwhile, a result detected by one of the distance measuring sensors 32 is used as a distance from the article in the radial feeders 30 disposed at both sides of the radial feeder 30 detected by the one ranging sensor 32. In this case, since the number of distance measuring sensors (detecting units) can be reduced, a cost can be reduced.

In the above embodiment, the form in which the feed power P of the radial feeders 30 is the amplitude has been described by way of example. However, the feed power P may be a vibration time of the radial feeders 30. Alternatively, the feed power P may be both the amplitude and the vibration time.

In the above embodiment, the form in which the feeder controlling part 104 calculates the heights S of the articles on the basis of the detected signals detected by the distance measuring sensors 32 and obtains the feed power P using the calculated heights S has been described by way of example. However, the form may be a form in which the feeder controlling part 104 obtains the feed power P without calculating the heights S. In the case of this constitution, formula (11) below is used for the calculation of the feed power P. $P = A 1 \times W / \left(L-Sp\right) + B 1$ (11)

In the above formula (11), "A1" and "B1" are coefficients. "L"is a distance from the bottom 30a of the radial feeder 30 to the ranging sensor 32. "Sp" is a detection value (a distance between the ranging sensor 32 the article) indicated by the detecting signal of the ranging sensor 32. When receiving the detecting signal sent from the ranging sensor 32, the feeder controlling part 104 substitues the detection value Sp indicated by the detecting signal and the supply amount W becoming the target supply amount for the above formula (4), and calculates the feed power P.

In addition to the above embodiment, the supply amounts W, the coefficient A, and the coefficient B may be stored in the storing part 102 by corresponding to shapes of the articles and/or the conveying passages of the radial feeders 30. Thereby, the control corresponding to the shapes of the articles and/or the conveying passages of the radial feeders 30 can be performed. For this reason, the trouble of an operator changing setting of the coefficients or the like in each of the shapes of the articles and/or the conveying passages of the radial feeders 30 can be avoided.

In the above embodiment, the radial feeders 30 acting as the conveying units have been described by way of example. However, the conveying units may be forms in which the articles are conveyed by, for instance, rotatably driven coil units (screws) or belt conveyors. In the case of the coil unit, the feeder controlling part 104 controls revolutions per minute (rpm) or the like of the coil unit as the feed power. In addition, in the case of the belt conveyor, the feeder controlling part 104 controls rpm of a roller driving a belt.

In the above embodiment, the form of the conical arrangement in which the combined weighing apparatus 1 includes the distribution table 20, and the radial feeders 30 are radially arranged around the distribution table 20 has been described by way of example. However, the combined weighing apparatus may be a form of linear arrangement in which the conveying units and the weighing units are linearly arranged side by side.

A method of controlling the radial feeders 30 in the above embodiment can be also applied to, for instance, a cross feeder CF.

### Reference Signs List

- 1: Combined weighing apparatus
- 10: Article supply chute
- 20: Distribution table
- 30: Radial feeder (conveyor apparatus)
- 31: Trough (conveying unit)
- 32: Ranging sensor (detecting unit)
- 33: Drive unit
- 40: Pool hopper
- 50: Weighing hopper
- 56: Load cell
- 80: Combined weighing control unit
- 86: Touch panel
- 90: Conveyance control unit
- 93: Supply amount acquiring part
- 94: Deriving part
- 96, 102: Storing part
- 97, 104: Feeder controlling part
- 98, 106: Updating part
- 100: Control unit
- 108: Correcting part

## Claims

1. A conveyor apparatus (30) that controls an operation of a conveying unit (31) such that an amount of articles supplied from the conveying unit (31) is set to a target supply amount, the conveyor apparatus (30) comprising:
the conveying unit (31), which is a trough forming a conveying passage extending radially from a center of the conveying unit;
a detecting unit (32) configured to detect a height (S) of the article on the conveying unit (31);
a drive unit (33) configured to drive the conveying unit (31) with predetermined feed power;
a supply amount acquiring part (93) configured to acquire a supply amount value (W) supplied from the conveying unit;
wherein a deriving part (94) configured to change the feed power from the drive unit (33) multiple times to convey the article to the conveying unit (31), acquire the height (S) of the article and the supply amount (W) when the different types of feed power are set, and derive a relation among the height of the article, the supply amount of the conveying unit (31), and the feed power of the conveying unit (31) using the acquired height (S) of the article and the acquired supply amount (W), and
wherein the conveyor apparatus (30) is configured to control the operation of the conveying unit (31) by applying by means of the drive unit (32) a feed power determined using the derived relation with the detected height of the article on the conveying unit (31) and the target supply amount set.

2. The conveyor apparatus (30) according to claim 1, further comprising a control unit (100) configured to drive the drive unit (33) with the feed power obtained from the height detected in the detecting unit (32) and the target supply amount in the relation.

3. The conveyor apparatus (30) according to claim 1 or 2, wherein the deriving part calculates a coefficient (A) and a coefficient (B) in a formula below on the basis of the height (S) and the supply amount (W) that are acquired for each of the different types of feed power (P) when the deriving part changes the feed power from the drive unit (33) multiple times to convey the article to the conveying unit (31): $P = A \times W / S + B .$

4. The conveyor apparatus (30) according to claim 3, further comprising an updating part (98, 104) configured to update the coefficient (A) and the coefficient (B) on the basis of the height (S) and the supply amount (W) that are acquired when the article is conveyed in a state in which the feed power is controlled to become the target supply amount.

5. The conveyor apparatus (30) according to claim 3 or 4, wherein the deriving part (98, 104) calculates the coefficient (A) and the coefficient (B) by smoothing the height (S) and the supply amount (W) with respective moving averages.

6. A combined weighing apparatus (1) comprising a conveyor apparatus (30) according to any one of the preceding claims, wherein the combined weighing apparatus (1) comprises:
a distribution unit (20) configured to distribute articles;
a plurality of conveying units (31) configured to convey the articles supplied from the distribution unit (20); and
a plurality of weighing units (50) arranged corresponding to the plurality of conveying units (31) and configured to weigh the articles supplied from the conveying units (31),
the combined weighing apparatus (1) controls an operation of each of the conveying units (31) such that an amount of articles supplied to the weighing units is set to a target supply amount, and comprises:
detecting units (32) configured to detect heights of the articles on the conveying units;
a storing part (96, 102) configured to store relations among the heights of the articles, supply amounts of the conveying units, and feed power of the conveying units; and
a control unit (100) configured to control the conveying units (31) with the feed power obtained from the heights detected by the detecting units (32) and the target supply amounts in the relations.

7. The combined weighing apparatus (1) according to claim 6, comprising a correcting part (108) configured to correct the feed power on the basis of differences between weighed values of the articles weighed in the weighing units and the target supply amounts.

8. The combined weighing apparatus (1) according to claim 6 or 7, wherein the detecting units (32) detect the heights of the articles located adjacent to discharge ends of the conveying units.

9. The combined weighing apparatus (1) according to any one of claims 6 to 8, comprising an updating part (98, 106) configured to update the relations stored in the storing part during operation.

10. The combined weighing apparatus (1) according to any one of claims 6 to 9, wherein, when the feed power is defined as P, the height is defined as S, and the supply amount is defined as W, the feed power (P) is calculated on the basis of a formula below: $P = A \times W / S + B$ where A and B are coefficients.

11. The combined weighing apparatus (1) according to claim 10, wherein the supply amounts (W), the coefficient (A), and the coefficient (B) are stored in the storing part (96, 102) by corresponding to shapes of the articles and/or conveying passages of the conveying units.

12. The combined weighing apparatus (1) according to any one of claims 6 to 11, wherein:
the conveying units (31) convey the articles depending on vibration; and
the feed power is an amplitude in the conveying units (31).

13. The combined weighing apparatus (1) according to any one of claims 6 to 12, wherein the plurality of detecting units (32) are provided in conveying directions of the conveying units (31).

## Patentansprüche

1. Fördervorrichtung (30), die einen Betrieb einer Fördereinheit (31) so steuert, dass eine Menge von Artikeln, die von der Fördereinheit (31) zugeführt werden, auf eine Ziel-Zuführmenge eingestellt wird, wobei die Fördervorrichtung (30) umfasst:
die Fördereinheit (31), die ein Trog ist, der einen Förderdurchgang bildet, der sich radial von einer Mitte der Fördereinheit erstreckt;
eine Erfassungseinheit (32), die konfiguriert ist, um eine Höhe (S) des Artikels auf der Fördereinheit (31) zu erfassen;
eine Antriebseinheit (33), die konfiguriert ist, um die Fördereinheit (31) mit vorbestimmter Zuführleistung anzutreiben;
ein Zuführmengen-Erfassungsteil (93), das konfiguriert ist, um einen Zuführmengen-Wert (W) zu erfassen, der von der Fördereinheit zugeführt wird;
wobei ein Ableitungsteil (94) konfiguriert ist, um die Zuführleistung von der Antriebseinheit (33) mehrfach zu ändern, um den Artikel zu der Fördereinheit (31) zu fördern, die Höhe (S) des Artikels und die Zuführmenge (W) zu erfassen, wenn die verschiedenen Arten der Zuführleistung eingestellt sind, und eine Beziehung zwischen der Höhe des Artikels, der Zuführmenge der Fördereinheit (31) und der Zuführleistung der Fördereinheit (31) unter Verwendung der erfassten Höhe (S) des Artikels und der erfassten Zuführmenge (W) abzuleiten, und
wobei die Fördervorrichtung (30) konfiguriert ist, um den Betrieb der Fördereinheit (31) zu steuern, durch Anwenden, mittels der Antriebseinheit (32), einer Zuführleistung, die unter Verwendung der abgeleiteten Beziehung mit der erfassten Höhe des Artikels auf der Fördereinheit (31) und der eingestellten Ziel-Zuführmenge bestimmt wird.

2. Fördervorrichtung (30) gemäß Anspruch 1, ferner umfassend eine Steuereinheit (100), die konfiguriert ist, um die Antriebseinheit (33) mit der Zuführleistung anzutreiben, die aus der Höhe, die in der Erfassungseinheit (32) erfasst wird, und der Ziel-Zuführmenge in der Beziehung erhalten wird.

3. Fördervorrichtung (30) gemäß Anspruch 1 oder 2, wobei das Ableitungsteil einen Koeffizienten (A) und einen Koeffizienten (B) in einer Formel unten basierend auf der Höhe (S) und der Zuführmenge (W) berechnet, die für jede der verschiedenen Arten von Zuführleistung (P) erfasst werden, wenn das Ableitungsteil die Zuführleistung von der Antriebseinheit (33) mehrfach ändert, um den Artikel zu der Fördereinheit (31) zu fördern: $P = A \times W / S + B .$

4. Fördervorrichtung (30) gemäß Anspruch 3, ferner umfassend ein Aktualisierungsteil (98, 104), das konfiguriert ist, um den Koeffizienten (A) und den Koeffizienten (B) basierend auf der Höhe (S) und der Zuführmenge (W) zu aktualisieren, die erfasst werden, wenn der Artikel in einem Zustand gefördert wird, in dem die Zuführleistung so gesteuert wird, dass sie die Ziel-Zuführmenge wird.

5. Fördervorrichtung (30) gemäß Anspruch 3 oder 4, wobei das Ableitungsteil (98, 104) den Koeffizienten (A) und den Koeffizienten (B) durch Glätten der Höhe (S) und der Zuführmenge (W) mit jeweiligen gleitenden Mittelwerten berechnet.

6. Kombinationswiegevorrichtung (1), umfassend eine Fördervorrichtung (30) gemäß einem der vorhergehenden Ansprüche, wobei die Kombinationswiegevorrichtung (1) umfasst:
eine Verteilungseinheit (20), die konfiguriert ist, um Artikel zu verteilen;
eine Vielzahl von Fördereinheiten (31), die konfiguriert sind, um die Artikel, die von der Verteilungseinheit (20) zugeführt werden, zu fördern; und
eine Vielzahl von Wiegeeinheiten (50), die entsprechend der Vielzahl von Fördereinheiten (31) angeordnet und konfiguriert sind, um die Artikel zu wiegen, die von den Fördereinheiten (31) zugeführt werden,
die Kombinationswiegevorrichtung (1) einen Betrieb jeder der Fördereinheiten (31) so steuert, dass eine Menge von Artikeln, die den Wiegeeinheiten zugeführt wird, auf eine Ziel-Zuführmenge eingestellt wird, und umfasst:
Erfassungseinheiten (32), die konfiguriert sind, um die Höhen der Artikel auf den Fördereinheiten zu erfassen;
ein Speicherteil (96, 102), das konfiguriert ist, um Beziehungen zwischen den Höhen der Artikel, den Zuführmengen der Fördereinheiten und der Zuführleistung der Fördereinheiten zu speichern; und
eine Steuereinheit (100), die konfiguriert ist, um die Fördereinheiten (31) mit der Zuführleistung zu steuern, die aus den Höhen, die von den Erfassungseinheiten (32) erfasst werden, und den Ziel-Zuführmengen in den Beziehungen erhalten wird.

7. Kombinationswiegevorrichtung (1) gemäß Anspruch 6, umfassend ein Korrekturteil (108), das konfiguriert ist, um die Zuführleistung basierend auf den Differenzen zwischen den Wiegewerten der Artikel, die in den Wiegeeinheiten gewogen werden, und den Ziel-Zuführmengen zu korrigieren.

8. Kombinationswiegevorrichtung (1) gemäß Anspruch 6 oder 7, wobei die Erfassungseinheiten (32) die Höhen der Artikel erfassen, die sich angrenzend an die Entladungsenden der Fördereinheiten befinden.

9. Kombinationswiegevorrichtung (1) gemäß einem der Ansprüche 6 bis 8, umfassend ein Aktualisierungsteil (98, 106), das konfiguriert ist, um die Beziehungen, die in dem Speicherteil gespeichert sind, während des Betriebs zu aktualisieren.

10. Kombinationswiegevorrichtung (1) gemäß einem der Ansprüche 6 bis 9, wobei, wenn die Zuführleistung als P definiert ist, die Höhe als S definiert ist und die Zuführmenge als W definiert ist, die Zuführleistung (P) basierend auf einer Formel unten berechnet wird: $P = A \times W / S + B$ wobei A und B Koeffizienten sind.

11. Kombinationswiegevorrichtung (1) gemäß Anspruch 10, wobei die Zuführmengen (W), der Koeffizient (A) und der Koeffizient (B) in dem Speicherteil (96, 102) gespeichert werden, indem sie den Formen der Artikel und/oder Förderdurchgängen der Fördereinheiten entsprechen.

12. Kombinationswiegevorrichtung (1) gemäß einem der Ansprüche 6 bis 11, wobei:
die Fördereinheiten (31) die Artikel abhängig von Vibration fördern; und
die Zuführleistung eine Amplitude in den Fördereinheiten (31) ist.

13. Kombinationswiegevorrichtung (1) gemäß einem der Ansprüche 6 bis 12, wobei die Vielzahl von Erfassungseinheiten (32) in Förderrichtungen der Fördereinheiten (31) bereitgestellt werden.

## Revendications

1. Un appareil transporteur (30) qui contrôle un fonctionnement d'une unité de transport (31) de telle sorte qu'une quantité d'articles délivrés par l'unité de transport (31) soit ajustée à une quantité cible à délivrer, l'appareil transporteur (30) comprenant :
l'unité de transport (31), qui est une trémie formant un passage de transport s'étendant radialement depuis un centre de l'unité de transport ;
une unité de détection (32) configurée pour détecter une hauteur (S) de l'article sur l'unité de transport (31) ;
une unité d'entraînement (33) configurée pour entraîner l'unité de transport (31) avec une puissance d'alimentation prédéterminée ;
une partie d'acquisition de quantité délivrée (93) configurée pour acquérir une valeur de quantité délivrée (W) délivrée par l'unité de transport ;
dans lequel une partie de calcul (94) est configurée pour modifier plusieurs fois la puissance d'alimentation de l'unité d'entraînement (33) pour transporter l'article vers l'unité de transport (31), acquérir la hauteur (S) de l'article et la quantité délivrée (W) lorsque les types différents de puissance d'alimentation sont ajustés, et calculer une relation entre la hauteur de l'article, la quantité délivrée de l'unité de transport (31), et la puissance d'alimentation de l'unité de transport (31) en utilisant la hauteur acquise (S) de l'article et la quantité délivrée acquise (W), et
dans lequel l'appareil transporteur (30) est configuré pour contrôler le fonctionnement de l'unité de transport (31) par application, au moyen de l'unité d'entraînement (33), d'une puissance d'alimentation déterminée à l'aide de la relation calculée avec la hauteur détectée de l'article sur l'unité de transport (31) et la quantité cible à délivrer ajustée.

2. L'appareil transporteur (30) selon la revendication 1, comprenant en outre une unité de contrôle (100) configurée pour entraîner l'unité d'entraînement (33) avec la puissance d'alimentation obtenue à partir de la hauteur détectée par l'unité de détection (32) et la quantité cible à délivrer de la relation.

3. L'appareil transporteur (30) selon la revendication 1 ou 2, dans lequel la partie de calcul établit un coefficient (A) et un coefficient (B) d'une formule ci-dessous sur la base de la hauteur (S) et de la quantité délivrée (W) qui sont acquises pour chacun des types différents de puissance d'alimentation (P) lorsque la partie de calcul modifie plusieurs fois la puissance d'alimentation de l'unité d'entraînement (33) pour transporter l'article vers l'unité de transport (31) : $P = A \times W / S + B$

4. L'appareil transporteur (30) selon la revendication 3, comprenant en outre une partie de mise à jour (98, 104) configurée pour mettre à jour le coefficient (A) et le coefficient (B) sur la base de la hauteur (S) et de la quantité délivrée (W) qui sont acquises lorsque l'article est transporté dans un état où la puissance d'alimentation est contrôlée pour atteindre la quantité cible à délivrer.

5. L'appareil transporteur (30) selon la revendication 3 ou 4, dans lequel la partie de calcul (98, 104) établit le coefficient (A) et le coefficient (B) par lissage de la hauteur (S) et de la quantité délivrée (W) par des moyennes mobiles respectives.

6. Un appareil de pesage combiné (1) comprenant un appareil transporteur (30) selon l'une des revendications précédentes, dans lequel l'appareil de pesage combiné (1) comprend :
une unité de distribution (20) configurée pour distribuer des articles ;
une pluralité d'unités de transport (31) configurées pour transporter les articles délivrés par l'unité de distribution (20) ; et
une pluralité d'unités de pesage (50) agencées pour correspondre à la pluralité d'unités de transport (31) et configurées pour peser les articles délivrés par les unités de transport (31),
l'appareil de pesage combiné (1) contrôlant un fonctionnement de chacune des unités de transport (31) de telle sorte qu'une quantité d'articles délivrés aux unités de pesage soit ajustée à une quantité cible à délivrer, et comprenant :
des unités de détection (32) configurées pour détecter les hauteurs des articles sur les unités de transport ;
une partie de stockage (96, 102) configurée pour stocker des relations entre les hauteurs des articles, les quantités délivrées des unités de transport, et la puissance d'alimentation des unités de transport ; et
une unité de contrôle (100) configurée pour contrôler l'unité de transport (31) avec la puissance d'alimentation obtenue à partir des hauteurs détectées par les unités de détection (32) et des quantités cibles à délivrer dans les relations.

7. L'appareil de pesage combiné (1) selon la revendication 6, comprenant une partie de correction (108) configurée pour corriger la puissance d'alimentation sur la base de différences entre des valeurs pesées des articles pesés par les unités de pesage et les quantités cibles à délivrer.

8. L'appareil de pesage combiné (1) selon la revendication 6 ou 7, dans lequel les unités de détection (32) détectent les hauteurs des articles qui se trouvent adjacents aux extrémités d'évacuation des unités de transport.

9. L'appareil de pesage combiné (1) selon l'une des revendications 6 à 8, comprenant une partie de mise à jour (98, 106) configurée pour mettre à jour les relations stockées dans la partie de stockage en cours de fonctionnement.

10. L'appareil de pesage combiné (1) selon l'une des revendications 6 à 9, dans lequel, la puissance d'alimentation étant définie par P, la hauteur étant définie par S, et la quantité délivrée étant définie par W, la puissance d'alimentation (P) est établie sur la base d'une formule ci-après : $P = A \times W / S + B$ A et B étant des coefficients.

11. L'appareil de pesage combiné (1) selon la revendication 10, dans lequel les quantités délivrée (W), le coefficient (A), et le coefficient (B) sont stockés dans la partie de stockage (96, 102) en correspondance avec des formes des articles et/ou des passages de transport des unités de transport.

12. L'appareil de pesage combiné (1) selon l'une des revendications 6 à 11, dans lequel :
les unités de transport (31) transportent les articles par le biais de vibrations ; et
la puissance d'alimentation est une amplitude dans les unités de transport (31).

13. L'appareil de pesage combiné (1) selon l'une des revendications 6 à 12, dans lequel la pluralité d'unités de détection (32) sont disposées dans des directions de transport des unités de transport (31).
